# EUROPÄISCHE PATENTANMELDUNG

(11) **EP 2 466 286 A1**
(43) Veröffentlichungstag der Anmeldung: **20.06.2012**
(21) Anmeldenummer: 11009840.7
(22) Anmeldetag: 14.12.2011
(51) Int. Cl.: G01M 3/04

(54) **Faseroptisches Wassermeldesystem**

(30) Priorität: 15.12.2010 DE 102010054511
(71) Anmelder: Fibre Optics CT GmbH Consulting & Testing, 70409 Stuttgart (DE)
(72) Erfinder: Wolf, Roland, 70437 Stuttgart (DE)
(74) Vertreter: Jeck, Anton

(57) **Zusammenfassung**

Die Erfindung betrifft ein faseroptisches Wassermeldesystem, das aus mindestens einer wasserdurchlässigen Wassermeldebox, einer Spleißkassette zur Aufnahme der Wassersensorkassette und einer zweiten Spleißkassette zur Aufnahme einer 50 - 100 m Totzonenfaser und einer Wassersensorkassette an einem Lichtwellenleiterkabel zur Erkennung des Wassereintritts besteht. Die Wassersensorkassette enthält einen auf Wasser reagierenden Wassersensor bzw. Quellkörper und ein Kunststoff-Spannband, das in Abhängigkeit einer Wellenlänge von 1550 nm oder 1625 nm diesen verbiegenden Lichtwellenabschnitt begrenzt. Die bei der Verbiegung dieses Abschnitts auftretende Dämpfungserhöhung ist mittels eines am Kabelanfang oder - ende angeordneten Messgeräts messbar.

## Beschreibung

Die Erfindung betrifft eine faseroptische Messvorrichtung gemäß dem Oberbegriff des Anspruchs 1.

Eine ähnliche Messvorrichtung ist durch die EP1110 070 B1 bekannt. Der Wassersensor besteht dort aus einer Standard-Glasfaser nach ITU-T G. 652, die im Lichtwellenleiterkabel von Telekommunikationsnetzanlagen vorhanden ist, wobei geschnittene Glasfasern an den Kabel-/Glasfaserverbindungen in einer Wassersensorkassette mit innen liegendem Wassersensor, einem Quellkörper aus Viskoseschwammplatte, eingelegt sind.

Bei Wassereintritt an einer Stelle des Quellkörpers wird die Glasfaser seitlich verbogen. Das an diese Glasfaser angeschlossene, faseroptische Messgerät wertet diese Verbiegung dadurch aus, dass die Verzögerung zwischen einem in die Glasfaser geschickten Lichtimpuls und dem in dieser Glasfaser reflektiertem Licht dieses Lichtimpulses sowie der Unterschied zwischen dem Lichtimpulspegel und dem Pegel des reflektierten Lichts gemessen werden, womit der durch Biegung der Glasfaser hervorgerufene Dämpfungsanstieg ermittelt wird. Diese im Kabelnetz ausgewählte Glasfaser wird für die Telekommunikationsübertragung im Wellenlängenbereich 1550 nm und für Wassereintritt an den Verbindungsstellen im Wellenlängenbereich 1625 nm verwendet.

Ferner sind elektrische Wassersensoren bzw. Detektoren bekannt, die im Bereich der industriellen Anwendung "Gebäudetechnik" auf der Basis von Leitfähigkeits-, Kapazitäts- oder Diffusionsmessverfahren einen Wassereintritt melden.

Ein Nachteil dieser Systeme ist, dass die Wassereintrittsstellen in Telekommunikationsnetzen in Detektionsabständen von > 200 m oder in der Gebäudetechnik sternförmig umgebend bis zu einer Entfernung von etwa 20 m detektiert werden können und dass diese Systeme wirtschaftlich für eine max. Wassersensoranlage mit etwa 40 Stück begrenzt sind.

Aus der EP 1110 070 B1, Seite 2, ist ein sogenanntes OTDR-Rückstreumessgerät bekannt, mit dem Lichtimpulse in einen Lichtwellenleiter einer Lichtwellenleiterstrecke geschickt und der Pegel des zurück gestreuten Lichts und damit die Dämpfung des Lichtwellenleiters gemessen wird. Durch Messung der Zeit, die einen optischen Impuls für den Hin- und Rückweg zu einer zu ortenden Fehlerstelle des Lichtwellenleiters benötigt, kann auch der Abstand zwischen dem Messort und der Fehlerstelle festgestellt werden. Das Rückstreumessgerät arbeitet dabei mit einer Wellenlänge von 1550 nm oder 1625 nm.

Durch die US 5757988 ist eine faseroptische Wassermeldevorlichtung bekannt, die eine Kammer mit einem darin angeordneten, ausdehnbaren Block aufweist. Dieser Block dehnt sich bei Wassereintritt aus und betätigt über eine Schubstange einen Ziehdraht, der eine Faser außerhalb der Kammer verbiegt. Die mit der Verbiegung verbundene Dämpfungserhöhung wird gemessen.

Die bereits angeführte EP 1 110 070 B1 beschreibt einen Lichtwellenleiter-Wassersensor, der ein eigenes Gehäuse aufweist, das in einer Kassette einer Verbindungsstelle für den Lichtwellenleiter (LWL) befestigt ist. Das Gehäuse weist zwei voneinander im Abstand angeordnete und aufeinander ausgerichtete Führungen auf, in die ein LWL-Abschnitt einlegbar ist. Im Gehäuse ist eine auf Wasser reagierende Schwammplatte abgestützt und derart angeordnet, dass sie den zwischen den Führungen einlegbaren LWL-Teil des LWL-Abschnitts bei Wassereintritt verbiegt. Die bei der Verbiegung dieses Abschnitts auftretende Dämpfungserhöhung ist mittels eines am Kabelanfang oder -ende angeordneten OTDR-Messgeräts messbar.

Durch die WO 94/18537 ist ein Wassersensor für eine optische Faser bekannt, dessen Biegefläche für einen wasserempfindlichen Schwellkörper bestimmte Formen aufweist.

Schließlich beschreibt die JP 05 34 0988 offenbar, dass in Reihe an ein OTDR-Messgerät angeschlossenen Messstationen jeweils eine Totzonenfaser zugeordnet ist.

Gebäude, Rechenzentren, Lagerräume, Tankanlagen, Kraftwerke, Chemieanlagen, Bergwerke, Tunnel, Pipelines usw. werden zum Zwecke der Risikominimierung durch Leckagen und somit Vermeiden von großen Wasserschäden an kritischen Stellen automatisch und ferngesteuert überwacht. Der flächendeckende Einsatz von elektrischen Sensoren mit automatischer Überwachung ist durch den externen Energiebedarf in Anzahl und Ausbreitung begrenzt oder Batterien müssen in einem Wartungszyklus getauscht werden. Im Bereich der Sicherheitstechnik, z. B. Ex-Bereich nach 1999/92/EG, sind sekundäre Explosionsschutzmaßnahmen mit dem Stand der Technik durch die benötigte, elektrische Energie nicht oder nur mit größerem Aufwand möglich. In Hochspannungsanlagen sind Mindestabstände zu leitenden Materialien und weitere Schutzmaßnahmen gegen Stromschlag einzuhalten.

Stand der Technik sind heute Messfühler mit mindestens zwei Elektroden, die z. B. über den elektrischen Strom die Leitfähigkeit von auftretendem Wasser messen und so bei Erreichen eines Grenzwerts einen Alarm auslösen. Eine weitere Methode, Wasser zu erkennen, ist die kapazitive Messmethode. Hier verändert das Wasser das Dielektrikum zwischen zwei Kondensatorplatten und somit die Grenzfrequenz in einem Schwingkreis, der als Alarmgeber dient. Zur Funktion wird für beide Verfahren elektrische Energie an den Sensoren benötigt. Diese Sensoren werden aus einer Batterie gespeist und als Einzelkomponenten mit einem akustischen Signalgeber eingesetzt. Sensoren können aber auch über Signalkabel miteinander vernetzt und mit einer zentralen Einheit zu automatischen Überwachungsaufgaben verbunden werden. Stand der Technik sind Zweidraht-Stromschnittstellen, RS485 oder IEEE 802.x Verbindungen. Ferner sind Verfahren bekannt, bei denen die flüssigen oder gasförmigen Stoffe in einen durchlässigen Schlauch oder Rohr eindringen, der in der Nähe der zu erwartenden Leckstellen verlegt wird. Der Schlauch oder das Rohr ist an einem Ende mit einer Pumpe und am anderen Ende mit einem Sensor verbunden. Über den Pumpendruck wird die austretende Substanz von der Leckagenstelle zum Sensor geleitet und analysiert. Über die Laufzeit der Durchflutung kann die Leckstelle lokalisiert werden (DE 4125741 A1, 04.02.1993).

Die Aufgabe der Erfindung besteht darin, eine Messvorrichtung der im Oberbegriff des Anspruchs 1 genannten Art zu schaffen, bei der das faseroptische Wassermeldesystem nachträglich in bestehende Industrieanlagen oder Gebäudeteile eingebaut werden können und die für das vollautomatische Wassermeldesystem Lichtwellenleiter nach ITU-T G. 652 auch über bestehende RFTS-Übervvachungssysteme von Telekommunikationsnetzanlagen verwendet werden kann.

Diese Aufgabe wird mit den Merkmalen des Anspruchs 1 gelöst.

Es genügt damit, von einer RFTS-Zentralstelle aus ein Lichtwellenleiterkabel in jedem Gebäude und Stockwerk durch alle Räume zu legen. An allen Wasseraustrittsstellen, wie Sprinkleranlagen, Wasserleitungen, Gebäudeeinführungen, Tankanlagen und dgl. wird das Kabel geöffnet und in eine spezielle, wasserdurchlässige Wassermeldebox mit innenliegender Wassersensorkassette und Totzonenfaser gelegt. Der Lichtwellenleiter (LWL) wird bei Detektionsstellen zwischen 2,5 m und 20 m entweder geschnitten und mit einer Totzonenfaser von 50 bis 100 m Länge verbunden, oder der LWL wird mittels einer Spezialaderzange ungeschnitten aus der Kabelader geholt und in den Wassersensor eingelegt.

Dieser Einsatz gründet sich auf der Erkenntnis, dass ohne Wassermeldesystem bei Wassereintritt in Folge von Hochwasser, Rohrbruch, Sprinklerdefekten, Klimaanlagendefekten, defekten Abdichtungen bei Gebäudeein- und Gebäudeausführungen, Kanalisationsschäden, Grundwasser oder Vandalismus in Gebäuden, Serverräumen, Rechenzentren, die für die Produktion und Logistik vorhandene elektronische Ausrüstung binnen weniger Minuten außer Kraft gesetzt werden kann.

Das faseroptische Wassermeldesystem gibt über kurze und weite Entfernungen bis etwa 20 km eine frühzeitige, zuverlässige und eindeutig identifizierbare Nachricht ab, wobei der mittels Biegung des Lichtwellenleiterabschnitts erzeugte Dämpfungsanstieg im Bereich der gewählten Überwachungswellenlänge so gering ist, dass er bei gleichzeitigem Wassereintritt an verschiedenen Stellen mittels des Meßsystems ohne Schwierigkeit detektierbar ist.

Die vorliegende Erfindung löst die o. g. Aufgaben für Wassermetdesysteme, die mit dem Stand der Technik heute nicht möglich sind:
a) das Wassermeldesystem kann pro Mess- oder Überwachungskanal ohne Verstärker oder Regenerator sehr große Areale mit Kabellängen bis zu 100 km von nur einer Position überwachen; die "digitale" Funktion der Wassermeldebox erzeugt eine signifikante Dämpfungsänderung des Lichtwellenleiters (LWL) und erzeugt einen sehr großen Signal-Rausch-Abstand im optischen Messsystem (OTDR); die zuverlässige Erkennung von aktivierten Wassermeldem ist damit über große Strecken möglich;
b) die Wassermeldebox arbeitet ohne externe Energiezufuhr; dadurch sind auch Anwendungen im EX-Bereich möglich, die einen sekundären Explosionsschutz fordern; die Energie zum Auslösen der Wassermeldebox ist als mechanische Energie in einem Viskose-Schwamm gespeichert und wird durch den Eintritt von Wasser plötzlich freigesetzt und verursacht eine dauerhafte Biegung des in die Wassermeldebox eingelegten Lichtwellenleiters, die auch nach Austrocknung erhalten bleibt. Diese signifikante Biegung kann mit einem OTDR- Messverfahren in Amplitude und Position genau bestimmt werden und gibt Aussage über den Ort der Leckage;
c) die Wassermeldebox, die Kabel als auch die Sensoren sind frei von elektrisch leitenden Materialien und in Bereichen einsetzbar, in denen hohe elektromagnetische Felder auftreten; der Lichtwellenleiter besteht aus Glas und ist ein Nichtleiter und für den Einsatz in Hochspannungseinrichtungen gut geeignet;
d) die nicht aktivierte Meldebox (kein Wasser) erzeugt keine Dämpfungsverluste im Überwachungskanal; somit ist die Anzahl der einzusetzenden Meldeboxen pro Messkanal quasi unbegrenzt;
e) die Wassermeldebox besteht aus dem Wassersensor und einem Totzonen-Lichtwellenleiter; diese Totzonen-lichtwellenleiter erfüllen folgende Aufgaben:
   - die Totzonenfaser hat einen unterschiedlicheren Rückstreukoeffizient als die Lichtwellenleiter, die zur Verbindung der Sensoren untereinander eingesetzt werden; diese Totzonenfaser erzeugt im OTDR- Rückstreudiagramm eine besondere Signatur, die speziell ausgewertet wird; damit kann die Lage der einzelnen Sensoren bei Inbetriebnahme des Systems automatisch erkannt werden; auch bei einem Stromausfall der Messeinrichtung oder Verlust der Referenzmessung (bei anderen Verfahren erforderlich) kann diese jederzeit wieder erfolgen, ohne die Wassermeldebox zu öffnen;
   - die Totzonenfaser addiert zu der physikalischen Länge der Verbindungskabel eine optische Länge in der Wassermeldebox; dadurch kann das OTDR-Messverfahren in einem größeren Dynamikbereich betrieben werden, und die Positionsauflösung der einzelnen Wassermeldeboxen am Anfang oder auch am Ende des Messkanals verbessert sich deutlich.

Gemäß einer einfachen, weiteren Ausbildung der Erfindung ist das Gehäuse der Wassermeldebox wasserdurchlässig, beinhaltet mindestens eine Fusionsspleißkassette mit einem Faserbiegeradius von 30 mm, einer Aufnahmestelle für die Spleißschutzhalterung und einer Aufnahmestelle für die Wassersensorkassette und ggf. eine darüber liegende Fusionsspleißkassette mit vormontierter Totzonenfaser von 50-100 m, deren beide Faserenden geschützt mit einer Hohlader in der Wassersensorkassette enden.

Gemäß einer weiteren Ausbildung der Erfindung ist der Lichtwellenleiterkabelabschnitt mit mindestens einer Hohlader mit mindestens einem Lichtwellenleiter nach ITU-T G. 652 versehen, deren Lichtwellenleiter im Inneren der Wassersensorkassette verlegt ist.

Gemäß einer weiteren Ausbildung der Erfindung ist der Lichtwellenleiterkabelabschnitt mit mindestens einer Hohlader mit mindestens einem biegeunempfindlichen Lichtwellenleiter nach ITU-T G. 657 versehen, deren Enden mittels Fusionsspleiß mit der Totzonenfaser nach ITU-T G. 652 verbunden ist; ferner ist ein Lichtwellenleiterabschnitt der Totzonenfaser nach ITU-T G. 652 in die Wassersensorkassette eingelegt.

Gemäß einer weiteren Ausbildung der Erfindung sind die Führungselemente in Ausdehnungsrichtung des Wassersensors bzw. der Viskoseschwammplatte parallel angeordnet.

Gemäß einer weiteren Ausbildung der Erfindung weist die Wassersensorkassette eine Spannvorrichtung mit einem auf dem Wassersensor bzw. der Viskoseschwammplatte in Abhängigkeit von der zu überwachenden Wellenlänge (1550 nm oder 1625 nm) abstützbaren Spannband zur Einstellung der Quellhöhe und zum Zusammendrücken der Viskoseschwammplatte nach Beseitigung des eingetretenen Wassers auf.

Eine weitere, vorteilhafte Ausbildung der Erfindung ist so getroffen, dass die Messvorrichtung eine Reihe von OTDR-basierenden Remote-Test-Units (RTUs) besitzt, die Faserdefekte nur auf dem biegeempfindlichen Lichtwellenleiter mit Erkennungsabständen von > 50 m in der ersten Spleißkassette mit Lichtwellenleitern nach ITU-T G. 652 oder bei biegeunempfindlichen Lichtwellenleitern nach ITU-T G. 657 durch Zwischenspleißen einer zweiten Spleißkassette (Totzonenfaser), die aus einer biegeempfindlichen Faser nach ITU-T G. 652 besteht, mit einer Wellenlänge im Bereich von 1550 nm oder 1625 nm erkennen und lokalisieren kann, und dass diese Defekte im Network Operation Center (NOC) auf einer GIS-Karte (Geographical Information System) angezeigt werden.

Die Erfindung wird nun anhand von Ausführungsbeispielen näher erläutert. Es zeigen:
- Fig. 1: eine Seitenansicht einer spaltbreit geöffneten Wassermeldesystembox zur Aufnahme einer Spleißkassette mit Wassersensorkassette und einer Spleißkassette mit Totzonenfaser,
- Fig. 2: eine Draufsicht auf das Unterteil der geöffneten Wassermeldesystembox der Fig. 1 mit Wassereintrittsöffnungen,
- Fig. 3: eine Draufsicht auf das Oberteil der geöffneten Wassermeldesystembox der Fig. 1 mit Wassereintrittsöffnungen,
- Fig. 4: eine Draufsicht auf das Unterteil der geöffneten Wassermeldesystembox der Fig. 2 mit einem in der Box befestigten, ungeschnittenen Lichtwellenleiterkabel, wobei der Lichtwellenleiter in eine Spleißkassette und in eine geöffnete Wassersensorkassette eingelegt ist und die Wassersensorkassette selbst zum Einklippsen, Einschrauben oder Ankleben in die Spleißkassette ausgebildet ist,
- Fig. 5: eine Draufsicht auf das Unterteil der geöffneten Wassermeldesystembox der Fig. 2 mit einem in der Box befestigten, geschnittenen Lichtwellenleiterkabel, wobei der mit dem Fusionsspleiß verbundene und mittels eines Crimpspleißschutzes geschützte Lichtwellenleiter in eine Spleißkassette und in eine geöffnete Wassersensorkassette eingelegt und mit dem Crimpspleißschutz in einem Spleißschutzhalter befestigt ist,
- Fig. 6: eine Draufsicht auf das Unterteil der geöffneten Wassermeldesystembox der Fig. 5 mit einer Totzonenfaserkassette mit eingelegtem Lichtwellenleiter, wobei die Enden des Lichtwellenleiters über Hohladern geschützt sind, die an den Enden des Lichtwellenleiterkabels mittels des Fusionsspleißschutzes verbunden sind,
- Fig. 7: eine Draufsicht auf das Unterteil der geöffneten Wassermeldesystembox der Fig. 6 mit zurück geklappter Totzonenfaserkassette und aktiviertem Wassersensor,
- Fig. 8: eine Draufsicht auf eine Wassersensorkassette mit einer Befestigungsöse in nicht aktiviertem Zustand, wobei sich in der Mitte der Wassersensorkassette der Wassersensor befindet, bestehend aus einem Spannband, einer Viskoseschwammplatte und einem in zwei Führungselemente eingelegten Lichtwellenleiter für den Überwachungsbereich 1625 nm,
- Fig. 9: eine Draufsicht auf eine Wassersensorkassette der Fig. 8 im aktivierten Zustand des Wassersensors, wobei die Biegung des Lichtwellenleiterabschnitts (1625 nm) durch die Länge des Spannbandes begrenzt ist,
- Fig. 10: eine Draufsicht auf eine Wassersensorkassette der Fig. 8 und 9 ohne Befestigungsöse zum Ankleben an die Spleißkassette, wobei hier der Wassersensor mit einem längeren Spannband für den Überwachungsbereich 1550 nm ausgebildet ist, und
- Fig. 11: eine Draufsicht auf eine Wassersensorkassette der Fig. 10 im aktivierten Zustand des Wassersensors, wobei die Biegung des Lichtwellenleiters und die erzeugten Dämpfungsänderungen im gewählten Überwachungsbereich 1550 nm durch die Länge des Spannbands begrenzt sind.

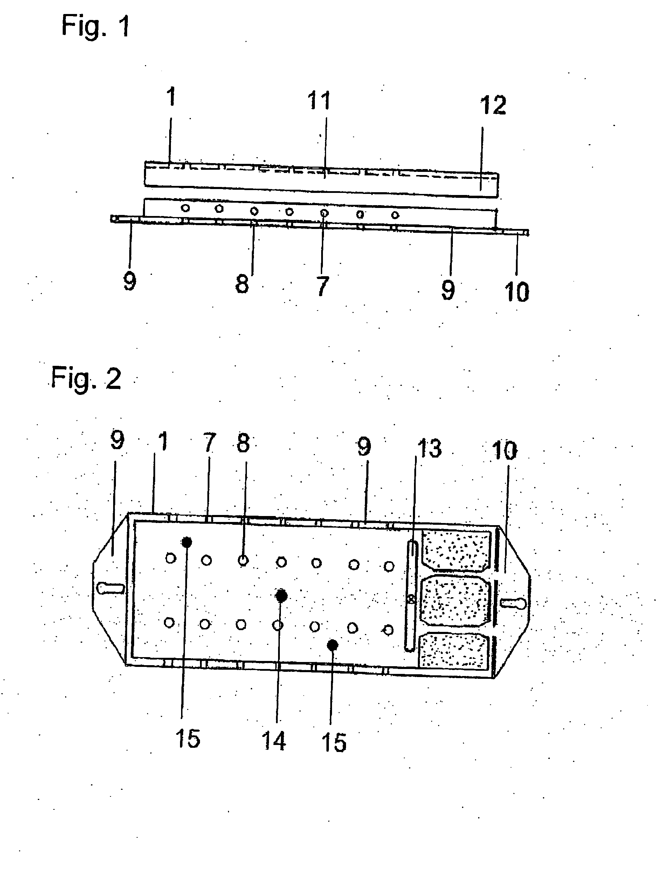

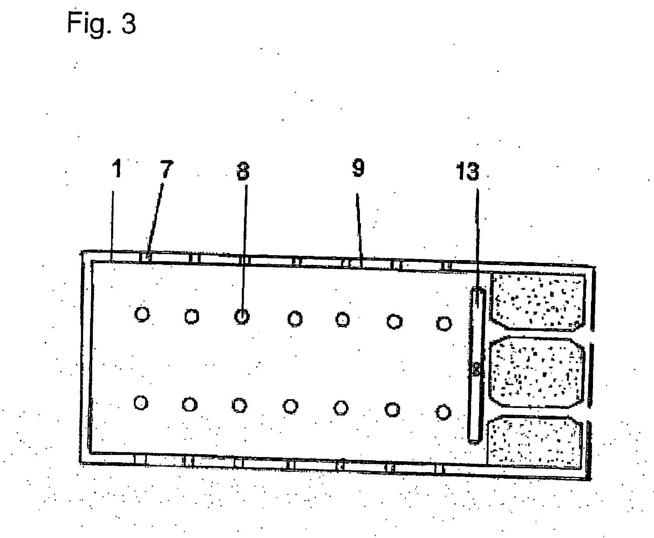

In den Figuren 1, 2 und 3 ist eine Wassermeldebox 1 zur Aufnahme einer Spleißkassette 2 mit Wassersensorkassette 3,19 und einer zweiten Spleißkassette 5 mit eingelegter Totzonenfaser 6 nach ITU-T G. 652 dargestellt.

Die Wassermeldebox 1 besteht aus einem in den Seiten 7 und Bodenfläche 8 wasserdurchlässigen Kunststoff- oder Edelstahlunterteil 9, der mittels Schrauben am Boden 10 (s. Fig. 2) befestigt werden kann und einem wasserdurchlässigen (11) Kunststoff- oder Edelstahloberteil 12, der mittels Schrauben oder Klipps auf dem Unterteil befestigt werden kann. Das Unterteil der Wassermeldebox 1 ist nach Fig. 2 mit einer Kabelbefestigung 13, einer Kabel-Zugentlastungselement-Befestigung 14 und zwei Spleißkassetten-Befestigungspunkten 15 versehen.

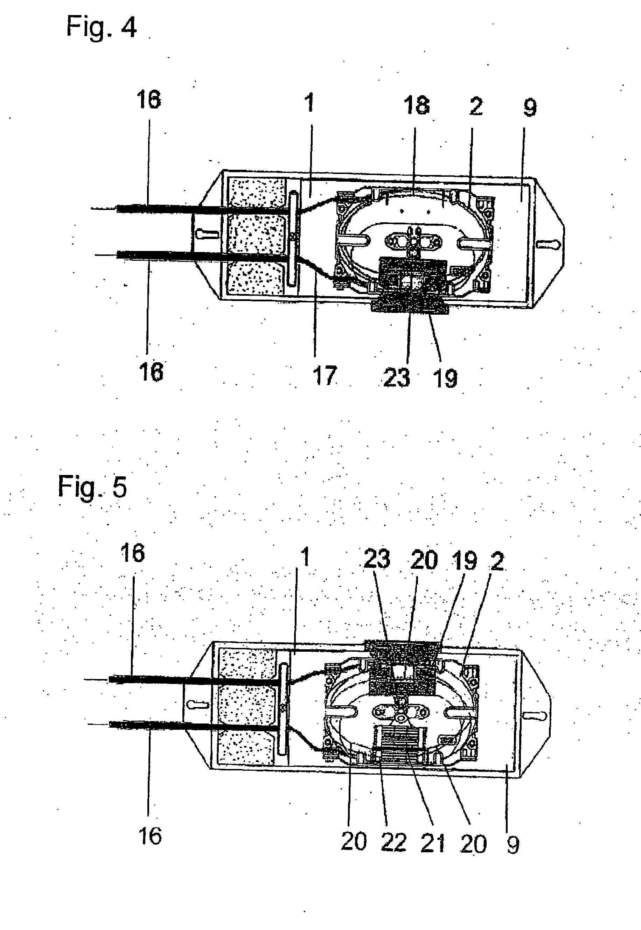

In Fig. 4 ist eine Spleißkassette 2 im Unterteil 9 der Wassermeldebox 1 dargestellt. An einem halogenfreien, flammwidrigen Lichtwellenleiterkabel 16 mit 1-6 Lichtwellenleitern der ITU-T G. 652, 657 in einer Hohlader 17 mit einer Raucut-Aderabsetzzange so geöffnet, dass (der) 1m Lichtwellenleiter 18 ungeschnitten in die geöffneten Wassersensorkassette 19 eingelegt werden kann. Die geschlossene bzw. geöffnete Wassersensorkassette 3, 19 ist mit einer Befestigungsöse 23 versehen, die in der Spleißkassette 2 im Unterteil 9 der Wassermeldebox 1 befestigt ist.

In Fig. 5 ist eine Spleißkassette 2 im Unterteil 9 der Wassermeldebox 1 dargestellt. Das halogenfreie, flammwidrige Lichtwellenleiterkabel 16 mit 1-6 Lichtwellenleitern der ITU-T G. 652 oder 657 ist geschnitten (20, 31), mit einem Fusionsspleiß verbunden und mit einem Fusionsspleißschutz 21 geschützt in einem Spleißkamm 22 abgelegt. Ein Abschnitt dieses Lichtwellenleiters 20 ist zur Überwachung von Wassereintritt in die geöffnete Wassersensorkassette 19 eingelegt. Die Wassersensorkassette 19 ist hier mit einer Öse 23 versehen, die auf einem Aufklippsdom der Spleißkassette 2 befestigt ist.

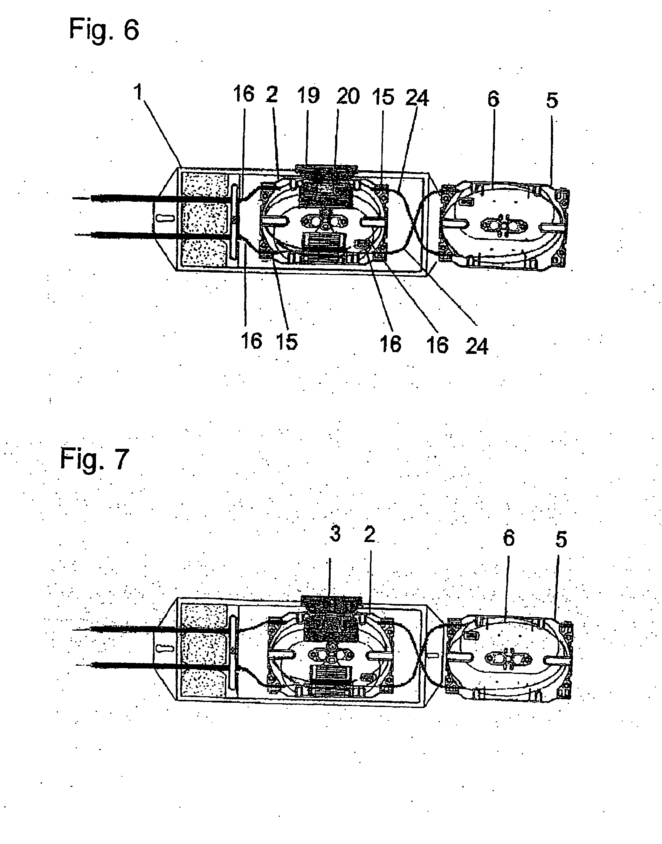

Fig. 6 zeigt die Kassette der Fig. 5 mit einer ITU-T G.652 Totzonenfaser 6 in der zweiten Spleißkassette 5, deren Faserenden mit einer Hohlader 24 geschützt mit den Faserenden des für die Überwachung des Wassereintritts an Detektionsstellen im Abstand von 2,5-20 m ausgewählten, geschnittenen Lichtwellenleiters 20 des Lichtwellenleiterkabels 16 verbunden ist. Die hier gezeigte, geöffnete Wassersensorkassette 19 wird nach dem Einlegen des zu überwachenden Lichtwellenleiters 20 geschlossen, und die Wassersensorkassette 3 und die zweite Spleißkassette 5 mit Totzonenfaser 6 werden über die erste Spleißkassette 2 gelegt und mit der Spleißkassettenbefestigung 15 im Unterteil 9 der Wassermeldebox 1 befestigt.

Fig. 7 zeigt im geöffneten Zustand die Fig. 6 mit einem mit dem Quellkörper bzw. Viskosepressschwamm aktivierten Wassersensor 27 der ersten Spleißkassette 2 im Unterteil der Wassermeldebox 1 mit der zurück geklappten zweiten Spleißkassette 5 inkl. der Totzonenfaser 6.

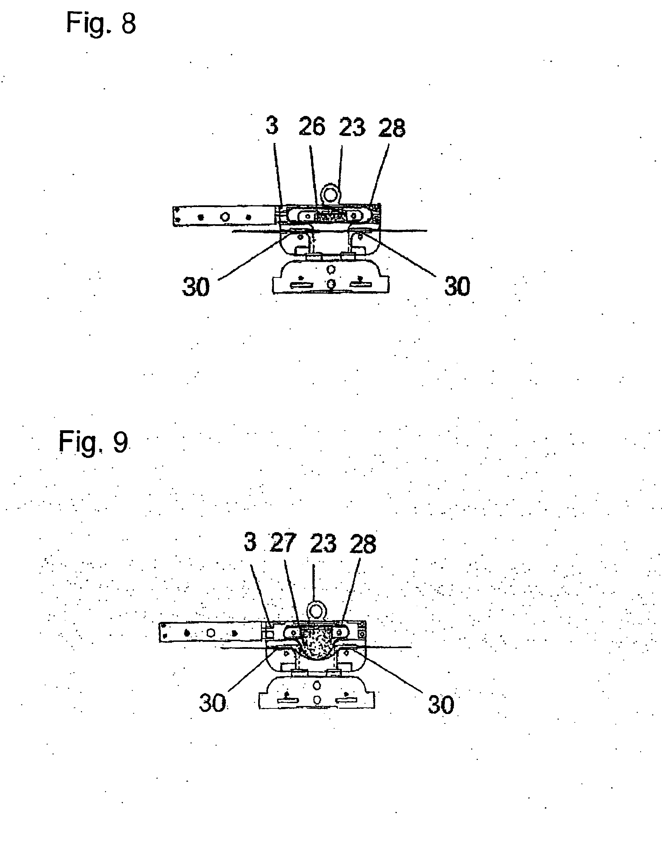

Die Figuren 8-11 stellen verschiedene Ausbildungen der Wassersensorkassette 19 im geöffneten Zustand dar.

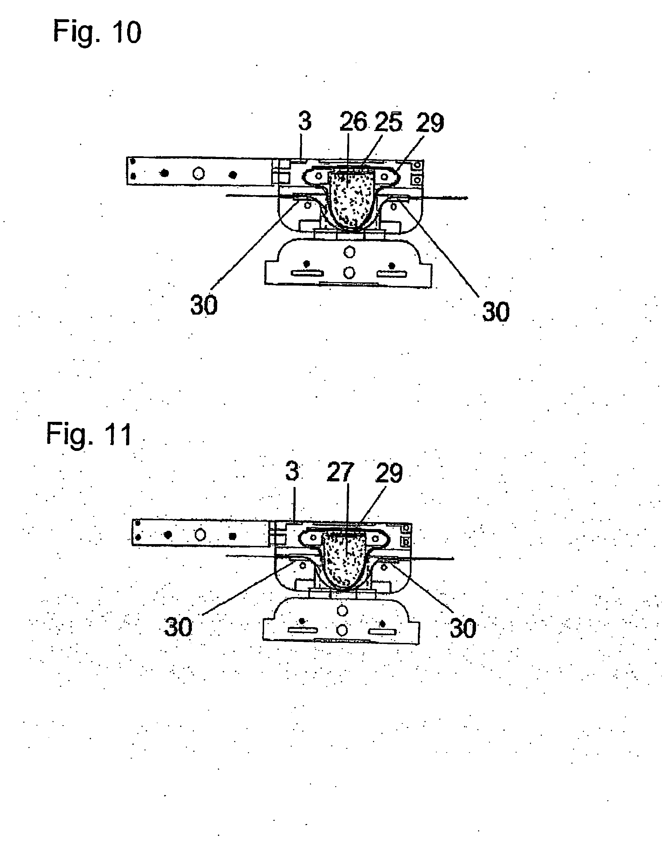

Die Figuren 8 und 10 im nicht aktivierten Zustand und die Figuren 9 und 11 im aktivierten Zustand weisen besondere Ausbildungen auf. Die Fig. 8-11 enthalten einen Wassersensor, der aus einem Quellkörper aus Viskosepressschwamm 26 zur Wasserdetektion mit einer Wasseraufnahme von > 80 %, der jedoch nicht bei einer relativen Feuchtigkeitsaufnahme von < 70 % reagiert, zwei LWL-Führungsnoten und einem dämpfungsabhängigen Spannband für die Überwachungsbereiche 28 (1625 nm) und Überwachungsbereich 29 (1550 nm) besteht.

Die Figuren 8 und 9 zeigen eine Befestigungsöse 23 zum Einklippsen oder Einschrauben an die erste Spleißkassette 2, während die Figuren 10 und 11 keine Befestigungsöse 23, aber dafür ein am Unterboden selbstklebendes Band 25 zum Einkleben in die Spleißkassette 2 zeigen.

In den Figuren 8 und 9 ist eine geöffnete Wassersensorkassette 19 mit einem Wassersensor 26, 27 für einen Betriebswellenbereich von 1550 nm und einen Detektions- Überwachungswellenlängenbereich von 1625 nm dargestellt. In der Mitte der Kassette 3 ist ein Spannband aus Kunststoff 28, 29, das die aufgrund der durch Wassereintritt ausgedehnten Viskosepressschwammplatte 26 auf eine im Wellenlängenbereich von 1625 nm oder 1550 nm vorgegebene max. Dämpfungserhöhung des überwachten, ungeschnittenen Lichtwellenleiters 18 oder geschnittenen Lichtwellenleiters 20 begrenzt.

In Fig. 9 ist eine geöffnete, aktivierte Wassersensorkassette 19 nach Fig. 8 dargestellt, der den Wassersensor bzw. Quellkörper 27 im aktivierten Zustand durch das Spannband 28 in der Ausdehnung bzw. Dämpfungsänderung begrenzt.

In den Figuren 10 und 11 ist eine geöffnete Wassersensorkassette 19 für einen Detektions-Überwachungsbereich von >1550 nm dargestellt. Die Kassette kann durch ein selbstklebendes Band an jeder Stelle einer Spleißkassette 2 angebracht werden. Die Wassersensorkassette 19 enthält hier jedoch einen Wassersensor mit einem längeren Spannband 29 ähnlich der Fig. 9 ohne Begrenzung der Dämpfungsänderung.

### Bezugszeichenliste

| | |
|---|---|
| 1 | Wassermeldebox |
| 2 | erste Spleißkassette |
| 3 | Wassersensorkassette |
| 4 | Spleißhalter |
| 5 | zweite Spleißkassette |
| 6 | Totzonenfaser nach ITU-T G. 652 |
| 7 | Seitenfläche, wasserdurchlässig |
| 8 | Bodenfläche, wasserdurchlässig |
| 9 | Kunststoff- und Edelstahlunterteil |
| 10 | Befestigungspunkt |
| 11 | wasserdurchlässig |
| 12 | Kunststoff- und Edelstahlunterteil |
| 13 | Kabelbefestigung |
| 14 | Befestigung Kabelzugentlastung |
| 15 | Spleißkassettenbefestigung |
| 16 | halogenfreies, flammwidriges Kabel |
| 17 | Hohlader geöffnet |
| 18 | ungeschnittene LWL-Kabel |
| 19 | geöffnete Wassersensorkassette |
| 20 | geschnittene(s) LWL-Kabel nach ITU-T G. 652 |
| 21 | Fusionsspleißschutz |
| 22 | Spleißkamm |
| 23 | Befestigungsöse zum Einklippsen der Wassersensorkassette |
| 24 | Hohlader |
| 25 | selbstklebendes Band |
| 26 | Wassersensor/ Quellkörper/ Viskosepressschwamm nicht aktiviert |
| 27 | Wassersensor/ Quellkörper/ Viskosepressschwamm aktiviert |
| 28 | Spannband, Dämpfungsänderung auf 1625 nm begrenzt |
| 29 | Spannband, Dämpfungsänderung unbegrenzt |
| 30 | Führungselemente |
| 31 | biegeunempfindlicher Lichtwellenleiter, geschnitten nach ITU-G. 657 |

## Patentansprüche

1. Faseroptische Messvorrichtung, nämlich RFTSⁱ-Glasfaserüberwachungs-system (Monitoringsystem), mit mindestens einer wasserdurchlässigen Wassermeldebox mit innen liegender Wassersensorkassette (3) in einer ersten Spleißkassette (2) mit einer angespleißten, innen liegenden Einmodenfaser, die
a) biegeempfindlich nach ITU-T G. 652ⁱⁱ oder
b) biegeunempfindlich nach ITU-T G. 657ⁱⁱⁱ ist,
und einer zweiten Spleißkassette mit einer innen liegenden, als Totzonenfaser^{iv} (6) nach ITU-T G. 652 arbeitenden Faser an einem Lichtwellenleiterkabel (16, 20, 31) zur Erkennung von Wassereintritt, wobei die Wassersensorkassette (3) einen Wassersensor (26) aufweist, der aus einem auf Wasser reagierenden Quellkörper und einen durch diesen verbiegbaren Lichtwellenleiterabschnitt (2) nach ITU-T G. 652 besteht, und wobei die Verbiegung dieses Abschnitts durch ein Kunststoffband begrenzt wird, um die auftretende Dämpfungserhöhung in einem Erkennungsbereich von 2,5-20 m mittels eines am Kabelanfang oder - ende angeordneten OTDR^{v} -Messgeräts zu messen,
**dadurch gekennzeichnet, dass**
- die wasserdurchlässige Wassermeldebox (1, 7, 8, 9, 11, 12) mit innen liegendem Wassersensor (26) ein eigenes Gehäuse aufweist, an das ein Lichtwellenleiterkabel nach ITU-T G. 652 oder ITU-T G. 657 (16, 18, 20, 31) ungeschnitten (18) oder geschnitten (20, 31) in einer Kabelbefestigung (13) und Zugentlastung (14) befestigt ist,
- zur Einzelbestimmung der Positionen von zwei Wassermeldeboxen oder Sensoren, die im gleichen Messkanal räumlich sehr nah beieinander liegen und gleichzeitig auslösen, eine Totzonenfaser zwischen beide Sensoren gespleißt ist,
- dabei das Lichtwellenleiterkabel geschnitten (6, 18, 20. 31) wird und der zu überwachende Lichtwellenleiter (6, 16, 20, 31) mit einem Spleißschutz (21) versehen wird, der in der ersten Spleißkassette (2) mit einer in der zweiten Spleißkassette (5) eingelegten Totzonenfaser (6) nach ITU-T G. 652 befestigt ist,
- die Wassersensorkassette (3, 19) zwei voneinander im Abstand angeordnete und aufeinander ausgerichtete Führungselemente (30) trägt, in die der Lichtwellenleiterabschnitt (6, 18, 20) einlegbar ist, und
- der Wassersensor-Quellkörper durch eine Viskoseschwammplatte (26) gebildet ist, die in der Wassersensorkassette (3, 19) abgestützt und derart angeordnet ist, dass sie auf dem zwischen den Führungselementen (30) einlegbaren Lichtwellenleiterteil des Lichtwellenleiterabschnitts (6, 18, 20) bei Wassereintritt mechanisch einwirkt.

2. Messvorrichtung nach Anspruch 1,
**dadurch gekennzeichnet,**
**dass** der Lichtwellenleiterkabelabschnitt (16, 20) mit mindestens einer Hohlader (17) mit mindestens einem Lichtwellenleiter nach ITU-T G. 652 (18) versehen ist, deren Lichtwellenleiter im Inneren der Wassersensorkassette (3, 19) verlegt ist.

3. Messvorrichtung nach Anspruch 1 oder 2,
**dadurch gekennzeichnet,**
**dass** der Lichtwellenleiterkabelabschnitt (16, 20) mit mindestens einer Hohlader (17) mit mindestens einem biegeunempfindlichen Lichtwellenleiter (31) nach ITU-T G. 657 versehen ist, deren Enden mittels Fusionsspleiß mit der Totzonenfaser nach ITU-T G. 652 (6) verbunden ist, und
**dass** ein Lichtwellenleiterabschnitt der Totzonenfaser (6) nach ITU-T G. 652 in die Wassersensorkassette (3, 19) eingelegt ist.

4. Messvorrichtung nach einem der Ansprüche 1 bis 3,
**dadurch gekennzeichnet,**
**dass** die Führungselemente (30) in Ausdehnungsrichtung des Wassersensors bzw. der Viskoseschwammplatte (26, 27) parallel angeordnet sind.

5. Messvorrichtung nach einem der Ansprüche 1 bis 4,
**dadurch gekennzeichnet,**
**dass** die Wassersensorkassette (3, 19) eine Spannvorrichtung (28, 29) mit einem auf dem Wassersensor bzw. der Viskoseschwammplatte (26, 27) in Abhängigkeit von der zu überwachenden Wellenlänge (1550 nm oder 1625 nm) abstützbaren Spannband (28, 29) zur Einstellung der Quellhöhe und zum Zusammendrücken der Viskoseschwammplatte (27) nach Beseitigung des eingetretenen Wassers aufweist.

6. RFTS-Glasfaser-Monitoringsystem nach einem der Ansprüche 1 bis 5,
**dadurch gekennzeichnet,**
**dass** die Messvorrichtung eine Reihe von OTDR-basierenden Remote-Test-Units (RTUs) besitzt, die Faserdefekte nur auf dem biegeempfindlichen Lichtwellenleiter mit Erkennungsabständen von > 50 m in der ersten Spleißkassette mit Lichtwellenleitern nach ITU-T G. 652 oder bei biegeunempfindlichen Lichtwellenleitern nach ITU-T G. 657 durch Zwischenspleißen einer zweiten Spleißkassette (Totzonenfaser), die aus einer biegeempfindlichen Faser nach ITU-T G. 652 besteht, mit einer Wellenlänge im Bereich von 1550 nm oder 1625 nm erkennen und lokalisieren kann, und dass diese Defekte im Network Operation Center (NOC) auf einer GIS-Karte (Geographical Information System) angezeigt werden.
Erläuterunaen zu Begriffen der Ansprüche
i RFTS: Remote Fiber Test System; das RFTS beinhaltet ein OTDR (s. u.) mit
optionalen, optischen Schaltern und einer Steuerungssoftware, die typischerweise auf einem PC oder auch Server installiert ist und eine USB- oder LAN-Verbindung zum Messgerät hat.
ii ITU G.652 ist ein Standard der "International Telecommunication Union; Empfehlung G.652: Eigenschaften einer optischen Einzelmodenfaser und eines entsprechenden Kabels: biegeempfindlich.
iii Empfehlung G.657: Eigenschaften einer optischen Einzelmodenfaser und eines entsprechenden Kabels: biegeunempfindlich.
iv Totzonenfaser: zusätzliche, optische Faserlänge zur tatsächlichen Kabellänge des Überwachungssystems, um Sensoren mit kurzem Abstand zueinander zu erkennen.
v OTDR: Optical Time Domain Reflectrometry, optisches Rückstreumessverfahren.
